# EUROPEAN PATENT SPECIFICATION

(11) **EP 3 106 330 B1**
(45) Date of publication and mention of the grant of the patent: **21.10.2020**
(21) Application number: 15172936.5
(22) Date of filing: 19.06.2015
(51) Int. Cl.: B60J 7/04, B60J 7/047, B60J 7/06

(54) **VEHICLE ROOF HAVING A MOVABLE ROOF DEVICE**
FAHRZEUGDACH MIT EINER BEWEGLICHEN DACHVORRICHTUNG
TOIT DE VEHICULE COMPRENANT UN DISPOSITIF DE TOIT MOBILE

(43) Date of publication of application: 21.12.2016
(73) Proprietor: Webasto SE, 82131 Stockdorf (DE)
(72) Inventor: Serneels, Marc, 85140 Les Essarts (FR); Lusson, Mickael, 49300 Le Puy Saint Bonnet (FR); Schönberger, Michael, 82131 Stockdorf (DE)
(74) Representative: Epping - Hermann - Fischer

(56) References cited:
- DE-A1- 3 828 062
- DE-A1- 10 318 345
- DE-A1-102004 032 627
- DE-A1-102005 043 339
- FR-A1- 2 983 130
- US-A- 1 831 907
- US-A- 5 169 206
- US-A1- 2005 280 291

## Description

### TECHNICAL FIELD

The invention relates to the technical field of motor vehicle.

The invention relates to a vehicle roof having a movable roof device for selectively closing and at least partially exposing a roof opening present in a roof surface of the vehicle, this movable roof device comprising a slidable front spoiler roof element and a slidable rear folding roof element.

It also relates to a motor vehicle equipped with such a vehicle roof.

### BACKGROUND OF THE INVENTION

Sliding roof devices for motor vehicle comprising a cover movable between a closed position, an open position and a tilted position are already known from the prior art. Such a cover is known as a "slidable front spoiler roof ".

Some vehicles, called "premium" vehicles are equipped not only with such a slidable front spoiler roof, but also with a "slidable rear folding roof ".

Said spoiler roof extends substantially above the front seats of the vehicle, while said folding roof extends substantially above the rear seats of the vehicle.

An example of such a device is described in DE 3828062.

Twice roof elements can be closed. But it is also possible to tilt spoiler roof and to slide it rearwards.

Nevertheless, said rear roof can be moved rearwards and consequently, can be folded, only when it is pushed by the spoiler roof.

So, rear passengers have only benefit of the open roof in said above condition.

Conversely, it may be desirable for the front passengers to have the spoiler roof in a closed position, and the rear roof in an open position.

### SUMMARY OF THE INVENTION

Accordingly, the object of the present invention is to provide a vehicle roof of the type known by DE 3828062, but whose functioning is simpler and done according to front and/or rear passengers' wishes. The invention is defined by the subject-matter of independent claim 1. Thus, the invention relates to vehicle roof having a movable roof device for selectively closing and at least partially exposing a roof opening present in a roof surface of the vehicle, this movable roof device comprising a slidable front spoiler roof and a slidable rear folding roof, both of which being guided along longitudinal guide means, characterized in that said front spoiler roof and said rear folding roof are driven by separate and independent driving means. Said driving means consist in two electric motors, one motor being dedicated to the functioning of said front spoiler roof, while the second motor is dedicated to the functioning of said rear folding roof. When the rear folding roof is completely folded at the rear part of the roof opening, said front spoiler roof is movable towards a position in which it is in contact with said rear folding roof.

Due to these features of the invention and particularly to the separate and independent driving means, said roof elements can be managed independently, according to the passengers' choice.

According to other advantageous and non-limiting features of the invention, taken alone or in combination:
when the rear folding roof is completely folded at the rear part of the roof opening, said front spoiler roof is movable towards a position in which it is in contact with and covers said rear folding roof.

According to another embodiment the vehicle roof further comprises a covering element to cover the front spoiler roof and/or the rear folding roof with respect to a side facing the vehicle interior.

If the front spoiler roof comprises a glass panel the covering element is beneficial to prevent sunlight entering the vehicle interior passing the front spoiler roof. But additionally or alternatively, the covering element is useful to cover a bottom side of the rear folding roof panel which faces the vehicle interior.

Conventionally folding roofs comprise a foldable hood element and a plurality of guiding and folding sticks movably arranged along a guide rail. During an opening process the guiding and folding sticks drive the hood element which gets folded and hence comprise a wavelike shape. Due to this shape gaps become apparent at the side edges of the hood element which causes undesirable noise generated by wind entering the vehicle interior in particular at high speed. Using a vehicle roof as described above the covering element contributes to reduce wind throb noise by covering the bottom side of the foldable roof and hence hinder wind entering the apparent gaps of the folded roof.

Further, besides the effects of reducing wind noise and preventing light to enter the vehicle interior such a covering element comprises an aesthetic aspect by covering the mechanics such as guiding means of the folding roof and the gaps of the folded roof from a vehicle interior side.

But it further enables a competitive manufacturing of the folding roof. Mostly, the foldable hood element of a folding roof comprises several flexible fabric cuttings arranged at both sides of the folding roof one facing the outside of the vehicle and one facing the vehicle interior. Using the covering element there is no need for fabric cuttings or a headlining of the hood element. This also contributes to reduce moving forces necessary to drive the rear folding roof.

Therefore, the covering element might be configured to completely cover the rear folding roof or additionally the front spoiler roof in a closed position. Preferably, the covering element covers the hood element of the folding roof or the rear folding roof from a rear edge of the roof opening to a given position with respect to the longitudinal vehicle direction. The covering element is moveably arranged and allows for parallel movement with respect to movement of the rear folding roof and/or the front spoiler roof.

The invention also relates to a motor vehicle equipped with such a vehicle roof.

### BRIEF DESCRIPTION OF THE DRAWINGS

Additional objects as well as features and advantages of the invention will become apparent from the description set forth hereunder when considered in conjunction with the accompanying drawings, which represent several possible embodiments. On these drawings:
- figure 1 is a schematic perspective plan view of the top part of a vehicle roof according to the invention;
- figures 2 to 6 are transverse section views of this roof, with its slidable front spoiler roof and its slidable rear folding roof in different positions, and more precisely :

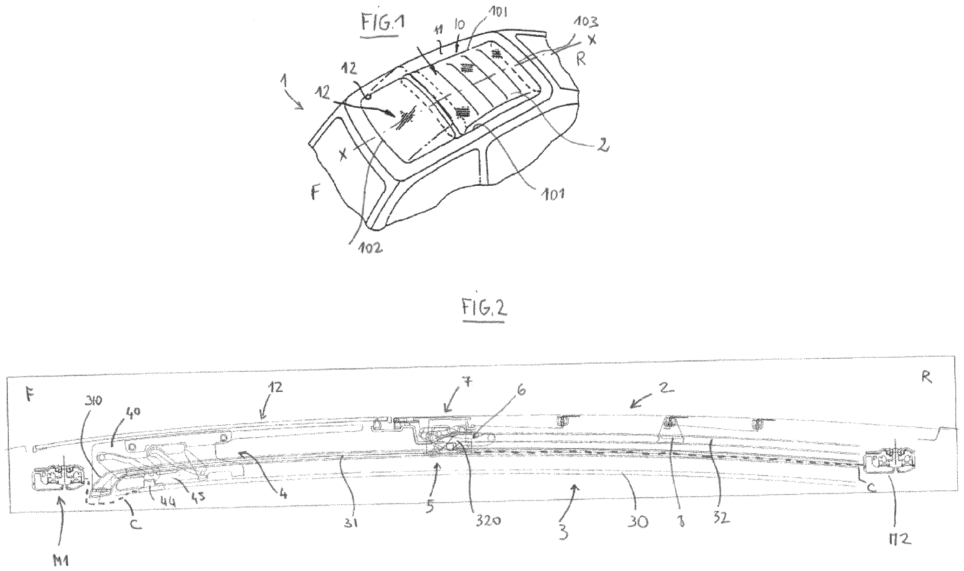

- figure 2: slidable front spoiler roof and slidable rear folding roof in a closed position;

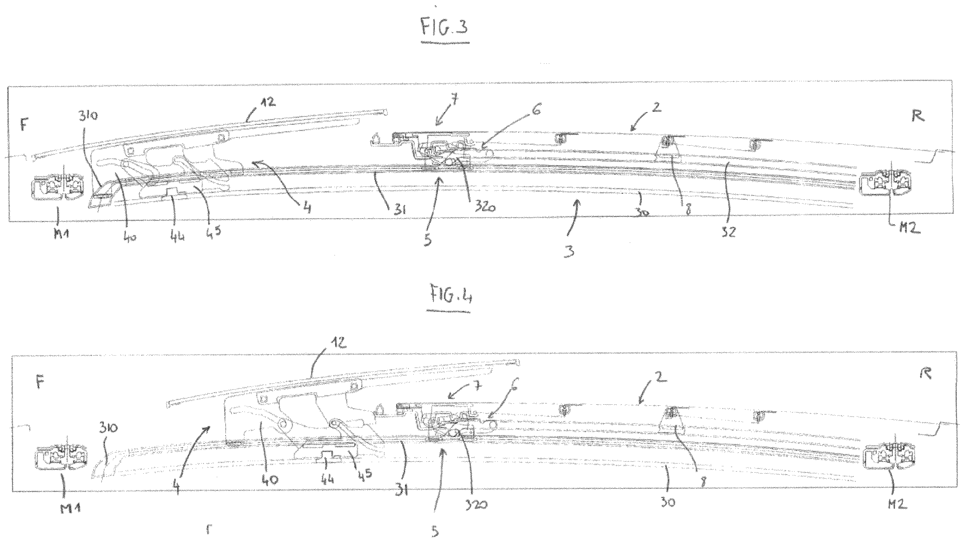

- figure 3: slidable front spoiler in a tilted position;
- figure 4: slidable front spoiler in an open position;

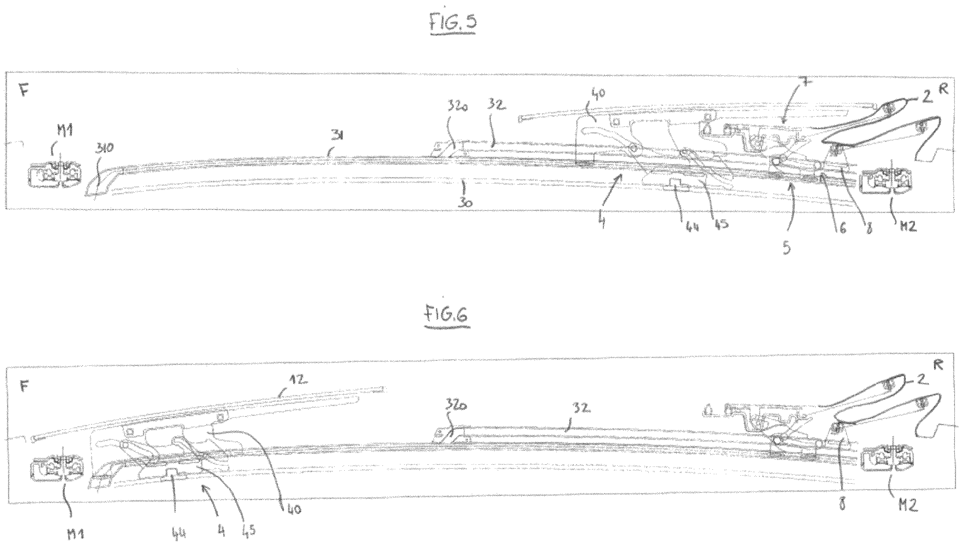

- figure 5: slidable front spoiler in an open and rear position, and rear folding roof in a folded position;
- figure 6: front spoiler in a front and tilted position, and rear folding roof in a folded position;

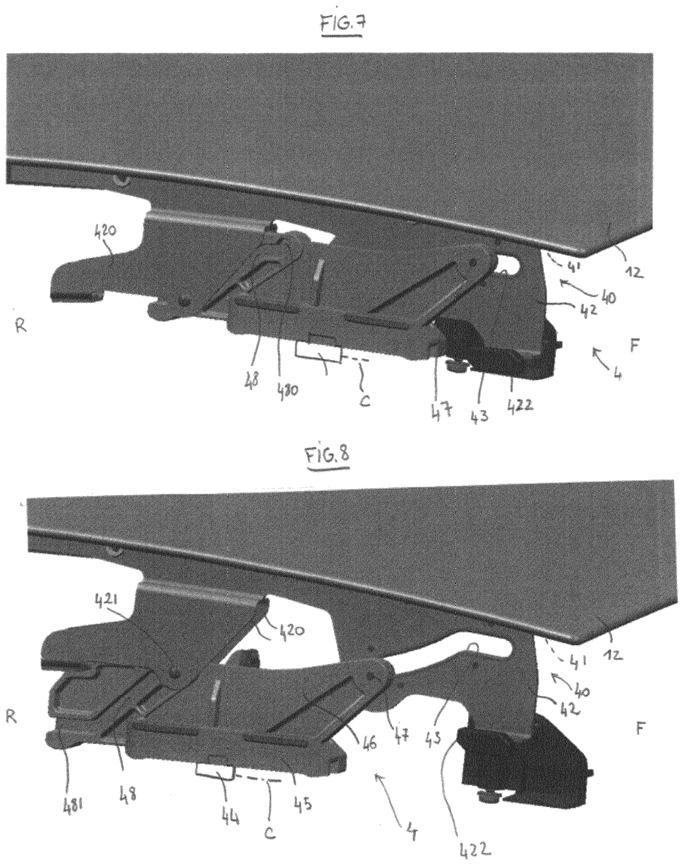

- figures 7 and 8 are perspective views of an example of means which can be used to move the slidable front spoiler.

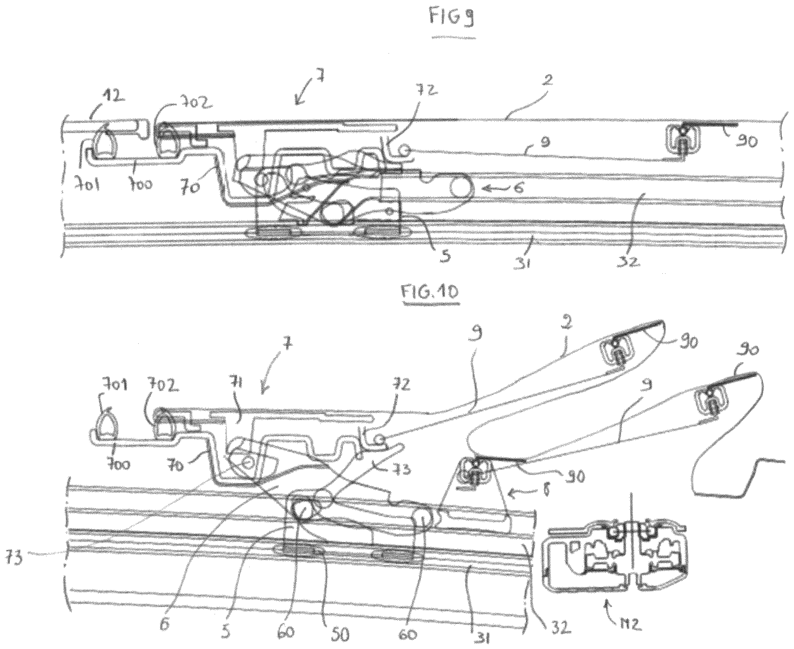

- figures 9 and 10 are, at a larger scale, parts of figures 2 and 6, respectively;

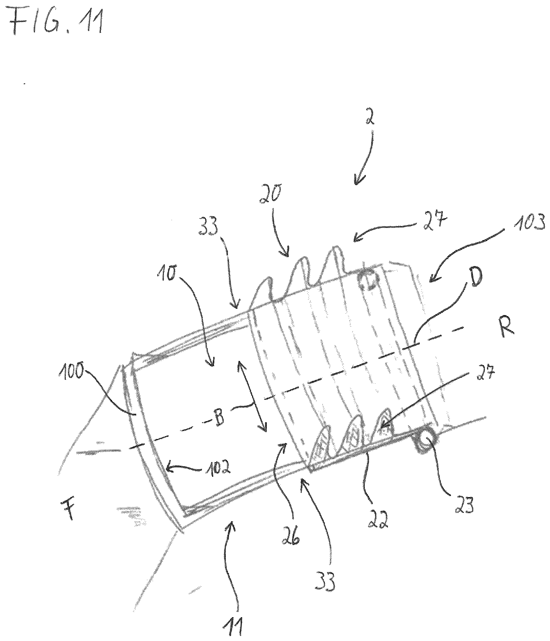

- figures 11, 12 and 13, illustrate embodiments of the vehicle roof further comprising a covering element.

### DESCRIPTION OF A POSSIBLE EMBODIMENT

In the description and the claims, the words "front" or "forward" and the words "rear" or "rearwards" are used by reference to the front F and the rear R of the vehicle equipped with the sliding roof of the invention. F and R are also visible on the figures, when necessary, and define a longitudinal vehicle direction D.

In figure 1, we can see a roof opening 10 provided in the roof 11 of a vehicle 1. The roof opening 10 comprised two longitudinal sides 101, a front edge 102 and a rear edge 103. In the description and the claims, the words "outer" and "inner" are used by reference to the outer side of the roof opening and the inner side thereof (i.e. the void).

The roof opening 10 is provided with a sliding roof device which comprises a slidable front spoiler 12 represented in solid line in its closed position (closure of the roof opening 10) and in dotted line in a tilted ventilation position. Further, spoiler 12 can be moved rearwards in the rear direction of the vehicle located on the right side of figure 1.

The spoiler 12 is preferably a transparent or translucent cover, especially a glass cover.

The roof opening 10 is also provided with a rear folding roof 2 made of any impermeable and foldable material constituting a canvas.

As visible on figures 2 to 6, each of said front spoiler roof 12 and said rear folding roof 2 are driven by separate and independent driving means.

These means are preferably electric motors M1, respectively M2. But additionally or alternatively, manual driving means is possible as well, for example realized by respective handle bars. The motors M1, M2 are attached to a fixed part of the roof 11, in the vicinity of the median plane of the opening 10. Said motors are linked to the driving means of spoiler roof 12 and folding roof 2 by cables C, as well known (see figure 2, in dotted lines). These cables are wound on a reel (not represented here).

Guiding means which are represented on the attached figures are already known.

Nevertheless, a brief description of them will follow. Unless otherwise mentioned, these means are duplicated and are symmetric on each side of a vertical plan represented by the line X-X' in figure 1. This also applies to said cables C.

Firstly, these guiding means comprise a guide means assembly 3 which is longitudinally fixed on each side 101 of the roof opening 10.

This guide assembly 3 has three guide pathways 30, 31 and 32.In other words, they constitute guiding rails 5.

Bottom pathway 30 is positioned on the lower part of assembly 3. It has a cross section with a shape in "U" whose opening is directed upwardly.

Intermediate pathway 31 is positioned above and in parallel with lower pathway 30. Both have the same length. The front end of intermediate pathway 31 consists in a guide ramp 310. Both have the same cross section with a shape in "U" whose opening is directed horizontally and in an outer direction. Said pathway 31 is offset from pathway 30 inwardly.

Top pathway 32 begins at mid-length of intermediate pathway 31 and is positioned above and in parallel with the latter. The front end of pathway 32 consists in a guide ramp 320. It has the same shape and orientation as pathway 31.

Means which permit to move slidable front spoiler 12 will be described hereafter with reference not only to figures 2 to 6, but more specifically with reference to figures 7 and 8. The means are generally identified by numeral reference 4.

Besides front spoiler 12, means 4 comprise, on each side of the roof opening 10: a slide body 40, and a main driving carriage 44 which supports a secondary carriage 45.

The slide body 40 is preferably an L profile with a horizontal leg 41 (see figure 7 and 8) onto which the spoiler 12 is fixed on a sealing way by any appropriate means and a vertical plate 40 intended to be linked to carriages 44 and 45.

From the front F to the rear R, said vertical plate 40 has front part 42 with an elongated opening directed rearwards, which constitutes a cam track 43. Its opposite ends are closed and will have an abutment function as described below. This track has a front horizontal part followed by a rear downward part.

The front bottom of part 42 is equipped with a sliding block 422.

About the middle of its length, said vertical plate 40 is divided in to parallel flanges 420 which extend offset plate 40 and constitute together a "U"-shape bracket.

Facing sides of said flanges are each equipped with a finger 421, whose function will be explicated hereafter.

The rear part of the plate 40 has a tapered shape.

Main carriage 44 is supported by bottom pathway 30 and has a shape which makes possible to move the carriage along the pathway.

Secondary carriage 45 is fixed to the top of main carriage 44. It extends upwardly to form a vertical plate 46. Its front raised edge carries a rotating finger 47 directed and engaged inside cam track 43 of slide body 40. Its shape is designed in order to prevent its escape from cam track 43.

In the rear part of vertical plate 46 and on each two opposite faces are present two identical grooves 48 which constitute cam tracks. In each of the tracks 48 is engaged one of said fingers 421 of flanges 420.

Tracks 48 have a shape quite similar to the shape of track 43.

Their front upper end 480 is closed, while their lower rear end 481 is open.

The functioning of this equipment is as follows.

In the situation of figure 2 in which spoiler 12 is closed, sliding block 422 is engaged in guide ramp 310, while finger 47 abuts against front end of cam track 43 and fingers 421 are situated near open ends 481 of tracks 48.

When motor M1 is activated, cables C push each of main carriages 44, so fingers 47 and 421 are moved in opposite directions, while raising the spoiler 12 in the tilted position of figure 3.

If the functioning of motor M1 is maintained, spoiler 12 is raised, and guided rearwards. In this situation, finger 47 is in abutment against the rear end of cam track 43 (which helps to push spoiler 12), while sliding block 422 is totally engaged in intermediate pathway 31.

The spoiler 12 can be moved to return to its closed position of figure 2. Its displacement is made according to a kinematics which is opposite to the one described above. When considering figure 6, it is shown that it is possible to have spoiler 12 in an intermediate position while the rear roof 2 is completely folded.

Hereafter will be described the structure which permits to move said rear folding roof 2.

This structure is quite similar to the equipment described in FR-A-2983130.

Nevertheless, a simpler embodiment will be described below. This description will be made especially with reference to figures 9 and 10.

Again and unless otherwise mentioned, the means which will be described below are duplicated and are symmetric on each side of a vertical plan represented by the line X-X' in figure 1. This also applies to said cables C linked to motor M2.

The structure which permits to move said rear folding roof 2 comprises a front cross unit 7, linked to a connecting rod 6 and to a main carriage 5.

Main carriage 5 has the shape of a reverse "U", the free end of its parallel branches being equipped with sliding blocks 50, which are engaged in intermediate pathway 31.

This carriage is linked to said connecting rod 6, which comprises a pair of rotating fingers 60 engaged in top pathway 32, one of which (the front one) is also a rotating axle for the rod 6. Consequently, when the carriage 5 is moved rearwards, the front part of connecting rod 6 is raised.

Said rod 6 is articulated around a transverse axle 73 linked to said front cross unit 7. This unit has a width which is equal to the width of the opening 10 in the roof 11 of the vehicle 1. It main function is to retain, in a tightly manner, the front end of folding roof 2.

In order to comply with this aim, said unit 7 comprise a top flat surface 71 on which the front end of folding roof 2 is attached by any known means.

Furthermore, unit 7 includes a support panel 70 which extends under surface 71.

The support panel 70 has a front and horizontal plate 700 which extends beyond the front end of surface 71.This plate 700 supports two transverse seals 701 and 702. The first one receives the rear edge of spoiler 12 when it is in its closed position (see the left side of figure 9), while seal 702 ensures a perfect seal between panel 70 and folding roof 2. Said panel 70 has a rear edge in the shape of transverse angle 72, whose horizontal part support a pair of leaf springs 9, the free end of which consisting in a flat surface 90 on which folding roof is fixed.

Unit 7 also incorporates a raising finger 73 which supports angle 72 when the folding roof is moved rearward. Consequently, unit 7 remains in a horizontal position, even when it is moved.

In pathway 32 is also engaged a free carriage 8 which is moved rearwards only when it is pushed by unit 7.

Carriage 8 supports a flat surface 90 identical with the one already described and a pair of leaf springs 9, the free end of which consisting in a flat surface 90 on which folding roof is fixed.

In the state of figure 2 in which said roof is closed, A pair of tensioning longitudinal straps (not shown here), equipped with a spring, adjust the tension of the folding roof 2. These straps are linked to the unit 7 and to the rear edge of the roof opening and extend below said roof 2.

When the unit is moved rearwards, said straps are no longer under tension, so that leaf springs 9 rise freely (figure 10) .

Because of the link between roof 2 and surfaces 90, said roof has a "zigzag" shape, with folds between each leaf spring 9. As shown on figure 5, when rear folding roof 2 is completely folded at the rear part of the roof opening 10, said front spoiler roof 12 is movable towards a position in which it is in contact with said rear folding roof 2.

Nevertheless, when the roof opening is wide and finish at the rear part of the vehicle, when the rear folding roof 2 is completely folded at the rear part of the roof opening 10, said front spoiler roof 12 is movable towards a position in which it is in contact with and covers said rear folding roof 2.

The following Figures 11, 12 and 13 illustrate the vehicle 1 and the vehicle roof 11 further comprising a covering element 22, which is moveably arranged with respect to the longitudinal vehicle direction D and which is configured to at least partially cover one side of the front spoiler roof 12 and/or the rear folding roof 2 facing a vehicle interior side.

The roof opening 10 is bordered by a roof frame 100 of the vehicle roof 11. The roof frame 100 preferably comprises double-sided guide rails 33 extending in the longitudinal vehicle direction D. The guide rails 33 are part of the guide assembly 3. The guide rails 33 might by additional guide pathways or they are realized by the guide pathways 30, 31 and/or 32. Hence, the covering element 22 is guided by the separate double-sided guide rails 33 or alternatively it is guided by the guide pathways 30, 31 and/or 32 of the front spoiler roof 12 and the rear folding roof 2.

The rear folding roof 2 comprises a hood element 20 with at least one flexible fabric cutting and is arranged on alternating folding and guiding sticks which are not shown in figures. The hood element 20 is mechanically coupled to the folding and guiding sticks. The folding and guiding sticks of the hood element 20 are moveably arranged in the guide rails 33 or the guided pathways 30, 31, 32 with respect to the longitudinal vehicle direction D. The guiding sticks may comprise sliding elements which enables sliding in the respective guide rails 33. In the region of the rear edge 103 of the roof opening 10 the hood element 20 is fixedly arranged.

At least one guiding stick, for example a front guiding stick of the rear folding roof 2, is coupled to driving means, for example the electrical rear motor M2 or to another additional electrical motor M3. Hence, the hood element 20 and the rear folding roof 2 are foldable using the at least one guiding stick. The rear edge 103 of the roof opening 10 substantially extends in a direction perpendicular to the longitudinal vehicle direction D.

In a closed state the hood element 20 and the rear folding roof 2 are substantially strained parallel to the vehicle roof 11. During opening or releasing of the roof opening 10, the hood element 20 is driven by the front guiding stick rearwards wherein the further guiding and folding sticks are moved rearwards with respect to the longitudinal vehicle direction D. The folding sticks are tilted up vertically with respect to the guide rails 33 such that the rear folding roof 2 and the hood element 20 realize a folded state as shown in Figure 11. The folded state shows one exemplary state of the rear folding roof 2 wherein the roof opening 10 is at least partially released.

The covering element 22 is arranged at a bottom side of the front spoiler roof 12 and/or the rear folding roof 2 including the hood element 20 facing the vehicle interior for covering the mentioned components. Regarding this exemplary embodiment, the covering element 22 is realized as a roller blind which is windable by a winding shaft 23. The covering element 22 at least comprises one fabric cutting or the like to prevent light entering the vehicle interior and/or to realize a visual projection for covering the hood element 20 especially in a folded state. The winding shaft 23 is arranged in the region of the rear edge 103 of the roof opening 10 and is fixedly arranged. The winding shaft 23 may comprise a winding spring, which is not shown in figure, to generate a spring force to the roller blind 22 with respect to the longitudinal vehicle direction D.

The covering element 22 is substantially flat in the region of the roof opening 10 and extends in transverse direction over the complete width B of the corresponding roof opening 10 between the guiding rails 33 of the guide assembly 3. A front edge 26 of the covering element 22 is located in the region of the front guiding stick of the hood element 20 of the rear folding roof 2 with respect to the longitudinal vehicle direction D. Hence, the covering element 22 extends from the rear edge 103 of the roof opening 10 to the front guiding stick of the hood element 20 and the rear folding roof 2.

Alternatively, the covering element 22 extends from the rear edge 103 to a given position with respect to the longitudinal vehicle direction D and also covers the bottom side of the front spoiler roof 12 even to the front edge 102 of the roof opening 10 and the front spoiler roof 12.

The covering element 22 is moveably coupled to driving means with respect to the longitudinal vehicle direction D and might be driven by the electrical motor M2 of the rear folding roof 2 or the additional electrical motor M3. Additionally or alternatively, the covering element 22 might be driveable manually using a handle bar of the covering element 22, for example.

To realize shifting of the covering element 22 the covering element 22 may comprise one or more sliding elements arranged at side edges of the covering element 22 and arranged in the guide rails 33 or the guide pathways 30, 31, 32 of guiding means 3.

If the hood element 20 and the rear folding roof 2 are going to be shifted rearwards, the covering element 22 is shifted rearwards as well and is going to be wound up by the winding shaft 23. Regarding a contrasting motion to close the rear folding roof 2, the covering element 22 and the hood element 20 are driven forwards with respect to the longitudinal vehicle direction D. In such a case, shifting of the covering element 22 is synchronized with shifting of the hood element 20 and the rear folding roof 2. Hence, there is no relative movement between the covering element 22 and the front guiding stick of the hood element 20 of the rear folding roof 2.

Due to the synchronized shifting of the covering element 22 and the hood element 20 of the rear folding roof 2 the position of the front edge 26 of the covering element 22 is ensured to be at the same height with respect to the hood element 20 and with respect to the longitudinal vehicle direction D. Hence, the covering element 22 permanently covers the bottom side of the hood element 20 in the region between the front guiding stick or a predetermined position of the front edge 26 of the covering element 22 and the rear edge 103 of the roof opening 10.

The covering element 22 prevents a view of passengers on the bottom side of the rear folding roof 2 including the guiding and folding sticks and on the mechanics of the guide assembly 3 including the guide pathways 30, 31, 32 and possibly the guide rails 33. The covering element 22 further prevents the mechanics from being accessible by passengers, for example. A further advantage of the covering element 22 is the reduced wind throb noise due to the covered gaps of the folded rear folding roof 2 which are, in particular, apparent in side edges 27 of the hood element 20 because of its folded state.

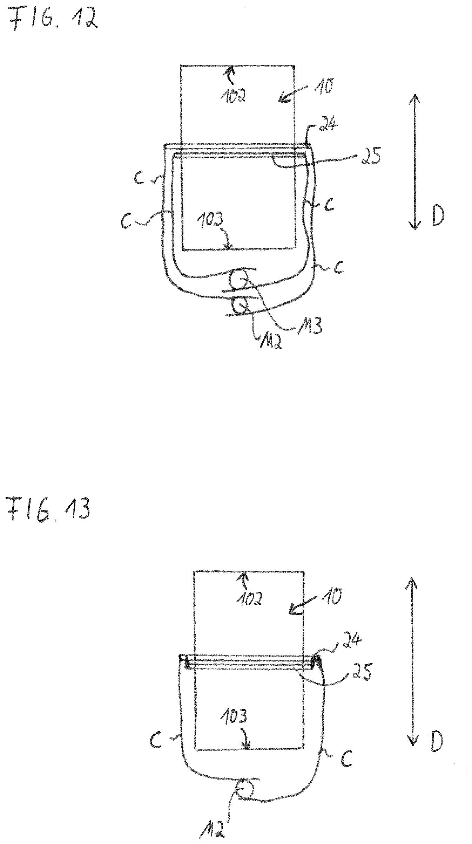

To realize synchronized shifting of the hood element 20 and the covering element 22, the driving means using the electrical motor M2 and/or M3 might be used. In the following figures 12 and 13 two exemplary embodiments of such a driving means are described.

Figure 12 schematically illustrates the roof opening 10. The driving means comprises two electrical motors M2 and M3 for driving the covering element 22 and the hood element 20 of the rear folding roof 2 separately. Each motor M2 and M3 is connected double-sided with the covering element 22 or the hood element 20 by respective driving cables C with respect to the longitudinal vehicle direction D. Electrical motor M2 is coupled to the front guiding stick 24 of the hood element 20. The other motor M3 is coupled to an arch 25 of the covering element 22 in the region of the front edge 26 of the covering element 22. Both motors M2 and M3 are electrically synchronized such that the synchronous motion of the covering element 22 and the hood element 20 as well as the rear folding roof 2 is enabled. Alternatively, there are other possibilities of coupling the motors M2 and M3 to the covering element 22 and the hood element 20 respectively. For instance, motor M3 might be coupled to sliding elements of the covering element 22.

Figure 13 illustrates an alternative embodiment of the driving means comprising only one electrical motor M2 which is coupled via driving cables C with the front guiding stick 24 of the hood element 20. To realize a synchronous motion as described above, the covering element 22 is mechanically coupled to the hood element 20 of the rear folding roof 2, in particular in the region of the front guiding stick 24. Preferably, the front guide stick 24 of the foldable hood element 20 is connected to the arch 25 which is located in a free end portion in the region of the front edge 26 of the covering element 22. The free end portion of the covering element 22 is a region which faces the front edge 102 of the roof opening 10. In such a way, synchronous shifting of the hood element 20 and the covering element 22 is ensured. If motor M2 is now activated, shifting of the hood element 20 causes simultaneous shifting of the covering element 22.

Alternatively to the described embodiments of Figures 12 and 13, other possibilities of synchronized shifting of the covering element 22 and the hood element 20 are possible. For example, the covering element 22 and the hood element 20 of the rear folding roof 2 are connected with each other in another way, maybe using screw connections and/or firmly bonded connections. It is further possible that the covering element 22 is connected to the hood element 20 in other ways than using the arch 25 in the free end portion of the covering element 22.

According to another possible embodiment of the vehicle roof 11 which is not illustrated in the figures, the covering element 22 might be designed as a plate-shaped roof element. In such a case, there is no need for a winding shaft and a corresponding winding spring as described above but analogous to the mentioned driving means, shifting of the plate-shaped roof element might be synchronized to shifting of the hood element 20 of the rear folding roof 2.

In further embodiments of the described vehicle roof 11, shifting of the covering element 22 and shifting of the rear folding roof 2 is not synchronized. Shifting of the covering element 22 might be realized independent from shifting of the rear folding roof 2 and the hood element 20 such that the covering element 22 even reaches the front spoiler roof 12 to cover the bottom side of the front spoiler roof 12 facing the vehicle interior.

In further embodiments, a motion of the covering element 22 is synchronized with a motion of the front spoiler roof 12 with respect to the longitudinal vehicle direction D. But it is also possible to realize shifting of the covering element 22 independently from shifting of the rear folding roof 2 and from shifting of the front spoiler roof 12 by electrical and/or manual driving means.

### REFERENCE SIGNS

- 1: vehicle
- 2: rear folding roof
- 3: guide (means) assembly
- 30: guide pathways
- 31: guide pathways
- 310: guide ramp
- 32: guide pathways
- 320: guide ramp
- 4: means
- 40: slide body/vertical plate
- 41: horizontal leg
- 42: front part
- 420: (parallel) flanges
- 421: finger
- 422: sliding block
- 43: cam track
- 44: main (driving) carriage
- 45: secondary carriage
- 46: vertical plate
- 47: rotating finger
- 48: grooves
- 480: front upper end
- 481: rear lower end
- 5: main carriage
- 50: sliding blocks
- 6: connecting rod
- 60: rotating fingers
- 7: front cross unit
- 70: support panel
- 700: (front horizontal) plate
- 701: transverse seal
- 702: transverse seal
- 71: (top flat) surface
- 72: transverse angle
- 73: raising finger/transverse axle
- 8: (free) carriage
- 9: leaf springs
- 90: flat surface
- 10: (roof) opening
- 101: longitudinal sides
- 102: front edge
- 103: rear edge
- 11: roof
- 12: (front) spoiler (roof)

- C: cables
- F: front
- R: rear
- M1: electric motor front
- M2: electric motor rear

## Claims

1. Vehicle roof (11) having a movable roof device for selectively closing and at least partially exposing a roof opening (10) present in a roof surface of the vehicle, this movable roof device comprising a slidable front spoiler roof (12) and a slidable rear folding roof (2), both of which being guided along longitudinal guide means (3), said front spoiler roof (12) and said rear folding roof (2) are driven by separate and independent driving means (M1,M2) which consist in two electric motors (M1,M2), one motor (M1) being dedicated to the functioning of said front spoiler roof (12), while the second motor (M2) is dedicated to the functioning of said rear folding roof (2), **characterized in that** when the rear folding roof (2) is completely folded at the rear part of the roof opening (10), said front spoiler roof (12) is movable towards a position in which it is in contact with said rear folding roof (2).

2. Vehicle roof (11) according to claim 1, **characterized in that** when the rear folding roof (2) is completely folded at the rear part of the roof opening (10), said front spoiler roof (12) is movable towards a position in which it is in contact with and covers said rear folding roof (2) .

3. Vehicle roof (11) according to one of the claims 1 to 2, further comprising a covering element (22) which is moveably arranged with respect to a longitudinal vehicle direction (D) configured to at least partially cover one side of the front spoiler roof (12) and/or the rear folding roof (2) facing a vehicle interior side.

4. Vehicle roof (11) according to claim 3, wherein the covering element (22) substantially extends flat in a region of the roof opening (10) parallel with respect to the closed front spoiler roof (12) and/or the unfolded rear folding roof(2).

5. Vehicle roof (11) according to claim 3 or 4, wherein
the covering element (22) being guided along the longitudinal guide means (3) or further double-sided guide rails (33).

6. Vehicle roof (11) according to one of the claims 3 to 5, wherein
shifting of the covering element (22) is synchronized with shifting of the front spoiler roof (12) and/or the rear folding roof (2).

7. Vehicle roof (11) according to one of the claims 3 to 6, wherein
the rear folding roof (2) comprises a roof arch (25) which is connected with a free end portion of the covering element (22) .

8. Vehicle roof (11) according to one of the claims 3 to 7, wherein
the covering element (22) is moveable by electrical driving means.

9. Vehicle roof (11) according to one of the claims 3 to 8, wherein
the covering element (22) is a windable roller blind with respect to the longitudinal vehicle direction (D).

10. Vehicle roof (11) according to claim 9, further comprising
a rewind shaft (23) for winding the roller blind, wherein the rewind shaft (23) is arranged at a rear edge (103) of the roof opening (10).

11. Vehicle roof (11) according to one of the claims 3 to 10, wherein
the covering element (22) is substantially strained in the region of the roof opening (10).

12. Vehicle roof (11) according to one of the claims 3 to 8, wherein
the covering element (22) is formed as a plate-shaped roof element.

13. Vehicle roof (11) according to one of the claims 3 to 12, wherein
the covering element (22) at least partially covers the longitudinal guiding means (3).

14. Motor vehicle **characterized in that** it is equipped with a vehicle roof (11) according to anyone of the preceding claims.

## Patentansprüche

1. Fahrzeugdach (11), aufweisend eine bewegbare Dachvorrichtung zum Schließen und wenigstens teilweisen Freigeben einer Dachöffnung (10), die in einer Dachfläche des Fahrzeugs vorhanden ist, wobei diese bewegbare Dachvorrichtung ein verschiebbares Frontspoilerdach (12) und ein verschiebbares hinteres Faltdach (2) umfasst, die entlang längs verlaufenden Führungsmitteln (3) geführt sind, wobei das Frontspoilerdach (12) und das hintere Faltdach (2) durch getrennte und unabhängige Antriebsmittel (M1, M2) angetrieben sind, die aus zwei Elektromotoren (M1, M2) bestehen, wobei ein Motor (M1) für die Funktion des Frontspoilerdachs (12) bestimmt ist, während der zweite Motor (M2) für die Funktion des hinteren Faltdachs (2) bestimmt ist, **dadurch gekennzeichnet, dass**, wenn das hintere Faltdach (2) vollständig an dem hinteren Teil der Dachöffnung (10) zusammengefaltet ist, das Frontspoilerdach (12) hin zu einer Stellung bewegbar ist, in der es sich in Kontakt mit dem hinteren Faltdach (2) befindet.

2. Fahrzeugdach (11) nach Anspruch 1, **dadurch gekennzeichnet, dass**, wenn das hintere Faltdach (2) vollständig an dem hinteren Teil der Dachöffnung (10) zusammengefaltet ist, das Frontspoilerdach (12) hin zu einer Stellung bewegbar ist, in der es sich in Kontakt mit dem hinteren Faltdach (2) befindet und dasselbe abdeckt.

3. Fahrzeugdach (11) nach einem der Ansprüche 1 bis 2, ferner umfassend ein Abdeckelement (22), das auf bewegbare Weise in Bezug auf eine Fahrzeuglängsrichtung (D) angeordnet ist und das dazu ausgelegt ist, eine Seite des Frontspoilerdachs (12) und/oder des hinteren Faltdachs (2), das einer Fahrzeuginnenseite zugewandt ist, wenigstens zum Teil zu bedecken.

4. Fahrzeugdach (11) nach Anspruch 3, wobei sich das Abdeckelement (22) im Wesentlichen flach in einem Bereich der Dachöffnung (10) erstreckt, der in Bezug auf das geschlossene Frontspoilerdach (12) und/oder das entfaltete hintere Faltdach (2) parallel verläuft.

5. Fahrzeugdach (11) nach Anspruch 3 oder 4, wobei das Abdeckelement (22) entlang den längs verlaufenden Führungsmitteln (3) oder weiteren doppelseitigen Führungsschienen (33) geführt ist.

6. Fahrzeugdach (11) nach einem der Ansprüche 3 bis 5, wobei ein Verschieben des Abdeckelements (22) mit einem Verschieben des Frontspoilerdachs (12) und/oder hinteren Faltdachs (2) synchronisiert ist.

7. Fahrzeugdach (11) nach einem der Ansprüche 3 bis 6, wobei das hintere Faltdach (2) einen Dachbogen (25) umfasst, der mit einem freien Endabschnitt des Abdeckelements (22) verbunden ist.

8. Fahrzeugdach (11) nach einem der Ansprüche 3 bis 7, wobei das Abdeckelement (22) durch elektrische Antriebsmittel bewegbar ist.

9. Fahrzeugdach (11) nach einem der Ansprüche 3 bis 8, wobei das Abdeckelement (22) eine aufrollbare Rouleauvorrichtung in Bezug auf die Fahrzeuglängsrichtung (D) ist.

10. Fahrzeugdach (11) nach Anspruch 9, ferner umfassend
eine Aufrollwelle (23) zum Aufrollen der Rouleauvorrichtung, wobei die Aufrollwelle (23) an einem hinteren Rand (103) der Dachöffnung (10) angeordnet ist.

11. Fahrzeugdach (11) nach einem der Ansprüche 3 bis 10, wobei das Abdeckelement (22) in dem Bereich der Dachöffnung (10) im Wesentlichen gespannt ist.

12. Fahrzeugdach (11) nach einem der Ansprüche 3 bis 8, wobei das Abdeckelement (22) als ein plattenförmiges Dachelement ausgebildet ist.

13. Fahrzeugdach (11) nach einem der Ansprüche 3 bis 12, wobei das Abdeckelement (22) die längs verlaufenden Führungsmittel (3) wenigstens zum Teil abdeckt.

14. Kraftfahrzeug, **dadurch gekennzeichnet, dass** es mit einem Fahrzeugdach (11) nach einem der vorhergehenden Ansprüche ausgestattet ist.

## Revendications

1. Toit de véhicule (11) ayant un dispositif de toit mobile pour fermer sélectivement et exposer au moins partiellement une ouverture de toit (10) présente dans une surface de toit du véhicule, ce dispositif de toit mobile comprenant un toit de becquet avant coulissant (12) et un toit pliant arrière coulissant (2), les deux étant guidés le long de moyens de guidage longitudinaux (3), ledit toit de becquet avant (12) et ledit toit pliant arrière (2) étant entraînés par des moyens d'entraînement séparés et indépendants (M1, M2) qui consistent en deux moteurs électriques (M1, M2), un moteur (M1) étant dédié au fonctionnement dudit toit de de becquet avant (12), tandis que le deuxième moteur (M2) est dédié au fonctionnement dudit toit pliant arrière (2), **caractérisé en ce que** lorsque le toit pliant arrière (2) est complètement plié au niveau de la partie arrière de l'ouverture de toit (10), ledit toit de becquet avant (12) est mobile vers une position dans laquelle il est en contact avec ledit toit pliant arrière (2).

2. Toit de véhicule (11) selon la revendication 1, **caractérisé en ce que** lorsque le toit pliant arrière (2) est complètement plié au niveau de la partie arrière de l'ouverture de toit (10), ledit toit de becquet avant (12) est mobile vers une position dans laquelle il est en contact avec et recouvre ledit toit pliant arrière (2).

3. Toit de véhicule (11) selon l'une quelconque des revendications 1 à 2, comprenant en outre un élément de recouvrement (22) qui est agencé de manière mobile par rapport à une direction de véhicule longitudinale (D) configuré pour recouvrir au moins partiellement un côté du toit de becquet avant (12) et/ou du toit pliant arrière (2) en face d'un côté intérieur du véhicule.

4. Toit de véhicule (11) selon la revendication 3, dans lequel l'élément de recouvrement (22) s'étend essentiellement à plat dans une région de l'ouverture de toit (10) parallèlement au toit de becquet avant fermé (12) et/ou au toit pliant arrière déplié (2).

5. Toit de véhicule (11) selon la revendication 3 ou 4, dans lequel l'élément de recouvrement (22) est guidé le long des moyens de guidage longitudinaux (3) ou en outre de rails de guidage doubles (33).

6. Toit de véhicule (11) selon l'une quelconque des revendications 3 à 5, dans lequel un décalage de l'élément de recouvrement (22) est synchronisé avec un décalage du toit de becquet avant (12) et/ou du toit pliant arrière (2).

7. Toit de véhicule (11) selon l'une quelconque des revendications 3 à 6, dans lequel le toit pliant arrière (2) comprend une arche de toit (25) qui est connectée avec une portion d'extrémité libre de l'élément de recouvrement (22).

8. Toit de véhicule (11) selon l'une quelconque des revendications 3 à 7, dans lequel l'élément de recouvrement (22) est mobile par des moyens d'entraînement électriques.

9. Toit de véhicule (11) selon l'une quelconque des revendications 3 à 8, dans lequel l'élément de recouvrement (22) est un volet roulant enroulable dans la direction de véhicule longitudinale (D).

10. Toit de véhicule (11) selon la revendication 9, comprenant en outre
un arbre de rembobinage (23) pour enrouler le volet roulant, l'arbre de rembobinage (23) étant agencé au niveau d'un bord arrière (103) de l'ouverture de toit (10) .

11. Toit de véhicule (11) selon l'une quelconque des revendications 3 à 10, dans lequel l'élément de recouvrement (22) est essentiellement tendu dans la région de l'ouverture de toit (10).

12. Toit de véhicule (11) selon l'une quelconque des revendications 3 à 8, dans lequel l'élément de recouvrement (22) est formé sous la forme d'un élément de toit en forme de plaque.

13. Toit de véhicule (11) selon l'une quelconque des revendications 3 à 12, dans lequel l'élément de recouvrement (22) recouvre au moins partiellement les moyens de guidage longitudinaux (3).

14. Véhicule à moteur **caractérisé en ce qu'**il est équipé d'un toit de véhicule (11) selon l'une quelconque des revendications précédentes.
